# EUROPÄISCHE PATENTSCHRIFT

(11) **EP 0 384 528 B1**
(45) Veröffentlichungstag und Bekanntmachung des Hinweises auf die Patenterteilung: **31.05.1995**
(21) Anmeldenummer: 90200375.5
(22) Anmeldetag: 19.02.1990
(51) Int. Cl.: H04L 1/22

(54) **Schaltungsanordnung mit zwei parallelen Zweigen zur Übertragung eines Binärsignales**
Circuitry with two parallel branches for transmitting a binary signal
Circuit à deux branches parallèles pour la transmission d'un signal binaire

(30) Priorität: 24.02.1989 DE 3905689
(43) Veröffentlichungstag der Anmeldung: 29.08.1990
(73) Patentinhaber: Philips Patentverwaltung GmbH, 22335 Hamburg (DE); Philips Electronics N.V., 5621 BA Eindhoven (NL)
(72) Erfinder: Schemmel, Hans-Robert, Dipl.-Ing., D-8500 Nürnberg (DE)
(74) Vertreter: Peuckert, Hermann, Dipl.-Ing.

(56) Entgegenhaltungen:
- FR-A- 2 359 553
- PATENT ABSTRACTS OF JAPAN, Band 10, Nr. 54 (E-385)[2111], 4. März 1986;& JP-A-60 208 135 (TOSHIBA) 19-10-1985

## Beschreibung

Die Erfindung betrifft eine Schaltungsanordnung mit zwei parallelen Zweigen zur Übertragung eines Binärsignales, wobei jedem Zweig aus je einer Quelle je ein Binärsignal zugeführt wird.

Derartige Schaltungsanordnungen werden beispielsweise für Taktversorgungseinrichtungen der Nachrichtentechnik benötigt. Dabei ist es vorteilhaft, zur Erfüllung der Anforderungen an eine hohe Betriebssicherheit die wichtigsten Bauteile beispielsweise in zwei parallelen Zweigen anzuordnen, wobei jedem Zweig aus je einer unabhängigen Quelle je ein Binärsignal, z.B. ein Taktsignal, zugeführt wird. Die beiden Binärsignale werden dabei synchronisiert und weisen eine hohe Übereinstimmung auf. Ein Zweig wird benutzt, während der andere Zweig in Reserve gehalten wird. Beim Ausfall oder der Störung des benutzten Zweiges stellt der in Reserve gehaltene Zweig die Funktion sicher.

Aus FR-A-2 359 553 ist ein Übertragungssystem bekannt, bei dem die Verdopplung eines Übertragungskanals durch ein Paar von Verdopplungseinrichtungen bewirkt wird. Hierzu sind Multiplexeinrichtungen vorgesehen, die die über die zwei Übertragungszweige zu übertragenden Daten an die Verdopplunseinrichtungen liefern und denen die über die Verdopplungseinrichtungen empfangenen Daten zugeführt werden.

Der Erfindung liegt die Aufgabe zugrunde, eine Schaltungsanordnung der eingangs genannten Art anzugeben, die beim Ausfall, bei der Störung oder bei Betriebsspannungsunterbrechung einzelner Schaltungskomponenten eines Zweiges das Binärsignal ohne Umschaltung ungestört überträgt, wobei auch das Austauschen einzelner Baugruppen eines Zweiges ohne Störung der Übertragung des Binärsignales möglich sein soll.

Die Aufgabe wird bei einer Schaltungsanordnung der eingangs genannten Art dadurch gelöst, daß die Zweige jeweils ein vom Binärsignal gespeistes Speisegerät aufweisen mit je zwei Gattern mit einem invertierenden und einem nichtinvertierenden Ausgang, daß die Zweige jeweils mindestens einen Differenzverstärker aufweisendes Empfangsgerät aufweisen, mit dem jeweils der nichtinvertierende Ausgang des zugehörigen Speisegerätes und der invertierende Ausgang des jeweils anderen Speisegerätes verbunden ist und daß die Betriebsspannungen über Zeitverzögerungsglieder zugeführt werden.

Vorteilhafte Ausgestaltungsformen sind in den Unteransprüchen enthalten.

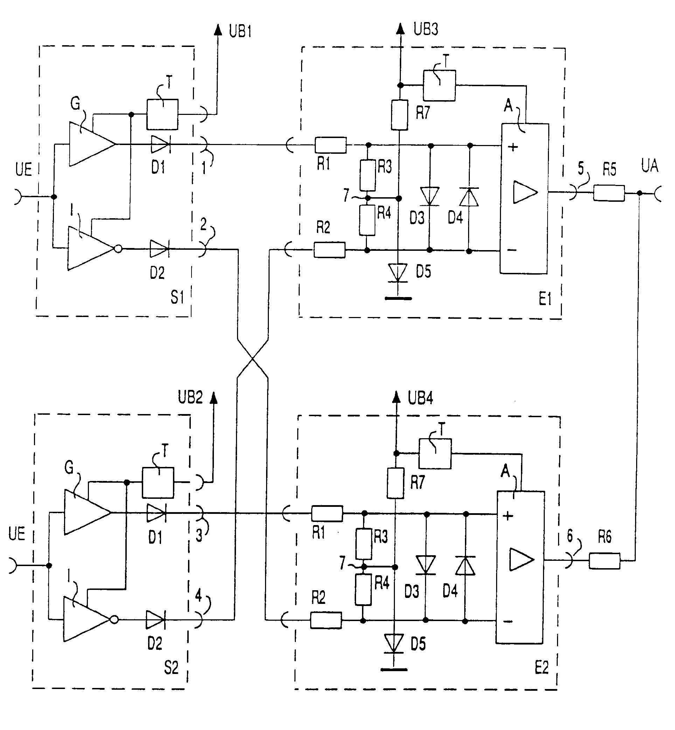

Anhand des in der Figur dargestellten Ausführungsbeispieles soll die Erfindung näher erläutert werden.

Die Figur zeigt eine Schaltungsanordnung mit zwei parallelen Zweigen zur Übertragung eines Binärsignales.

Die Figur zeigt eine redundante elektronische Schaltungsanordnung mit zwei parallelen Zweigen zur Übertragung eines Binärsignales. Dabei wird jedem Zweig aus je einer unabhängigen Quelle je ein identisches Binärsignal UE zugeführt. Der erste Zweig weist ein von einer Betriebsspannung UB1 versorgtes erstes Speisegerät S1 und ein von einer Betriebsspannung UB3 versorgtes erstes Empfangsgerät E1 auf. Der parallel zum ersten geführte zweite Zweig ist entsprechend dem ersten Zweig ausgebildet und enthält ein von einer Betriebsspannung UB2 versorgtes zweites Speisegerät S2 sowie ein von einer Betriebsspannung UB4 versorgtes zweites Empfangsgerät E2.

Jedes Speisegerät weist ein erstes Gatter G mit einem nichtinvertierenden Ausgang auf, der mit der Anode einer Diode D1 verbunden ist, sowie ein zweites Gatter I mit einem invertierenden Ausgang, der mit der Anode einer Diode D2 verbunden ist. Die Betriebsspannungen UB1, UB2 der Speisegeräte S1, S2 sind über Zeitverzögerungsglieder T zugeführt. Den Speisegeräten S1, S2 wird aus je einer in der Figur nicht dargestellten unabhängigen Quelle jeweils ein Binärsignal UE zugeführt und auf die Eingänge der Gatter G geschaltet. Die Binärsignale sind dabei synchronisiert, so daß sie eine hohe Übereinstimmung aufweisen.

Ein Signal 1 an der Kathode der Diode D1 des ersten Sendegerätes S1 wird über einen Widerstand R1 dem nichtinvertierenden Eingang eines Differenzverstärkers A des ersten Empfangsgerätes E1 zugeführt, während ein Signal 2 an der Kathode der Diode D2 des ersten Sendegerätes S1 über einen Widerstand R2 auf den invertierenden Eingang des Differenzverstärkers A des zweiten Empfangsgerätes E2 geschaltet ist. Entsprechend wird ein Signal 3 an der Kathode der Diode D1 des zweiten Sendegerätes S2 auf den nichtinvertierenden Eingang des Differenzverstärkers A des zweiten Empfangsgerätes E2 und ein Signal 4 an der Kathode der Diode D2 des zweiten Sendegerätes S2 auf den invertierenden Eingang des Differenzverstärkers A des ersten Empfangsgerätes E1 geschaltet. An den Ausgängen der Differenzverstärker A der beiden Empfangsgeräte E1, E2 liegen Signale 5, 6, die über Entkoppelungswiderstände R5, R6 zu einem Ausgangssignal UA zusammengeführt werden.

Die Zuführung der Betriebsspannungen UB3, UB4, der Differenzverstärker A der Empfangsgeräte E1, E2 erfolgt ebenfalls über Zeitverzögerungsglieder T. Die Eingänge des Diffrerenzverstärkers A sind über ein Widerstandsnetzwerk R1, R2, R3, R4 entkoppelt, sowie über Dioden D3, D4 spannungsbegrenzt. Dazu ist die Anode der Diode D3 mit dem nichtinvertierenden Eingang des Differenzverstärkers A verbunden, während die Kathode mit dem invertierenden Eingang verbunden ist. Die Diode D4 ist umgekehrt gepolt. Die Eingänge des Differenzverstärkers A sind darüber hinaus über eine Reihenschaltung der Widerstände R3, R4 mit einander verbunden, wobei über ihren gemeinsamen Kontaktpunkt 7 die Betriebsspannung UB3 über einen Widerstand R7 zugeführt wird. Der Kontaktpunkt 7 ist darüber hinaus über eine Diode D5 mit Massepotential verbunden.

Um Rückwirkungen auf die Schaltungsfunktion zu vermeiden, müssen die Ausgänge des Gatters G bzw. des Gatters I mit dem invertierenden Ausgang (Inverter I) der Speisegeräte im Störungsfall hochohmig werden. Daher sind das Gatter G und der Inverter I der Speisegeräte S1, S2 vorteilhafterweise als Tri-State-Buffer in TTL-Technik ausgebildet, d.h., die Ausgänge des Gatters G des Inverters I können neben den beiden Zuständen 1 oder 0 auch einen dritten hochohmigen Zustand annehmen.

Jedes Speise- und Empfangsgerät ist als steckbare Baugruppe ausgebildet. Die benötigten Massekontakte jeder Baugruppe sind dabei als sogenannte voreilende Massekontakte realisiert, d.h., beim Einstecken der einzelnen Baugruppen werden zuerst die Massekontakte vor spannungsführenden Verbindungen hergestellt.

Durch die Schaltungsanordnung des in der Figur gezeigten Ausführungsbeispieles wird somit erreicht, daß das Binärsignal UE auch beim Ausfall, bei der Störung oder bei Betriebsspannungsunterbrechungen einzelner Schaltungskomponenten ungestört übertragen wird. Darüber hinaus ist auch das Austauschen einzelner Baugruppen ohne Störung der Übertragung des Binärsignales UE möglich.

Beim Ausfall der Betriebsspannung UB1 des ersten Sendegerätes und somit des Gatters G und des Inverters I beispielsweise entkoppeln die Dioden D1 und D2 am Ausgang des Gatters G und des Inverters I die Leitungen mit den Signalen 1, 2 des ersten Sendegerätes. Die Empfänger E1, E2 werden weiterhin ohne Störung mit den Signalen 3, 4 des zweiten Sendegerätes S2 gespeist. Entsprechend verhält sich die Schaltungsanordnung beim Ausfall der Betriebsspannung UB2 des zweiten Sendegerätes. Da das Gatter G und der Inverter I als Tri-State-Buffer in TTL-Technik ausgebildet sind, nehmen ihre Ausgänge beim Betriebsspannungsausfall einen hochohmigen Zustand an.

Die Eingänge der Empfangsgeräte E1, E2 sind jeweils über die Widerstände R1, R2, die Ausgänge über die Widerstände R5, R6 entkoppelt, so daß beispielsweise beim Ausfall der Betriebsspannung UB3 des ersten Empfangsgerätes das zweite Empfangsgerät weiterhin über die Signale 2, 3 gespeist wird und so störungsfrei das Binärsignal UE überträgt.

Der Ausfall eines Sendegerätes S1 oder S2 bzw. der Ausfall des Binärsignales UE am Eingang eines Sendegerätes S1, S2 wird durch das Widerstandsnetzwerk R1, R2, R3, R4 und durch die an Masse liegende Diode D5 der Empfangsgeräte E1, E2 sowie durch eine entsprechend hohe Empfindlichkeit des Differenzverstärkers A in Bezug auf die Übertragung des Binärsignales UE unwirksam.

Die hohe Empfindlichkeit des Differenzverstärkers A führt zu hohen Schaltspannungen beim Austauschen einzelner Baugruppen. Deshalb sind zur Vermeidung dieses Problemes die Eingänge des Differenzverstärkers A über die Dioden D3, D4 spannungsbegrenzt. Um außerdem die Schaltspannungen insbesondere beim Einsetzen einer Baugruppe klein zu halten, werden die Betriebsspannungen UB1, UB2, UB3, UB4 der einzelnen Sendegeräte S1, S2 und Empfangsgeräte E1, E2 über Zeitverzögerungsglieder T zugeführt.

Die Betriebssicherheit kann durch das Parallelschalten weiterer Empfangsgeräte zu den Empfangsgeräten E1, E2 noch erhöht werden.

## Patentansprüche

1. Schaltungsanordnung mit zwei parallelen Zweigen zur Übertragung eines Binärsignales, wobei jedem Zweig aus je einer Quelle je ein Binärsignal zugeführt wird,
dadurch gekennzeichnet,
daß die Zweige jeweils ein vom Binärsignal (UE) gespeistes Speisegerät (S1, S2) aufweisen mit je zwei Gattern (G, I) mit einem invertierenden und einem nichtinvertierenden Ausgang, daß die Zweige jeweils mindestens ein einen Differenzverstärker (A) aufweisendes Empfangsgerät (E1, E2) aufweisen, mit dem jeweils der nichtinvertierende Ausgang des zugehörigen Speisegerätes und der invertierende Ausgang des jeweils anderen Speisegerätes verbunden ist und daß die Betriebsspannungen (UB1, UB2, UB3, UB4) über Zeitverzögerungsglieder (T) zugeführt werden.

2. Schaltungsanordnung nach Anspruch 1,
dadurch gekennzeichnet,
daß die Gatter (G, I) der Speisegeräte (S1, S2) als Tri-State-Buffer in TTL-Technik ausgebildet sind.

3. Schaltungsanordnung nach einem der Ansprüche 1 oder 2,
dadurch gekennzeichnet,
daß das Empfangsgerät (E) ein Netzwerk aus Widerständen (R1, R2, R3, R4) und Gleichrichterdioden (D3, D4) aufweist.

4. Schaltungsanordnung nach einem der Ansprüche 1 bis 3,
dadurch gekennzeichnet,
daß die Speisegeräte (S1, S2) und die Empfangsgeräte (E1, E2) jeweils als steckbare Baugruppe ausgebildet sind.

## Claims

1. Circuit arrangement comprising two parallel connected branches for transmitting a binary signal, one signal source each applying a binary signal to each branch, characterized in that the branches comprise each a supply means (S1, S2) fed by the binary signal (UE), each means comprising two gates that have an inverting and a non-inverting output, in that each branch comprises at least one receiver (E1, E2) that includes a differential amplifier (A), to which receiver the non-inverting output of the associated supply means and the inverting output of the other supply means are connected and in that the operating voltages (UB1, UB2, UB3, UB4) are supplied *via* time delay means (T).

2. Circuit arrangement as claimed in Claim 1, characterized in that the gates (G, I) of the power supply means (S1, S2) are arranged as tri-state buffers in TTL technology.

3. Circuit arrangement as claimed in one of the Claims 1 or 2, characterized in that the receiver (E) comprises a resistor network (R1, R2, R3, R4) and rectifier diodes (D3, D4).

4. Circuit arrangement as claimed in one of the Claims 1 to 3, characterized in that the supply means (S1, S2) and the receivers (E1, E2) are arranged as plug-in modules.

## Revendications

1. Montage de circuit à deux branches parallèles pour transmettre un signal binaire, un signal binaire étant respectivement acheminé à chaque branche à partir d'une source respective, caractérisé en ce que les branches présentent chacune un appareil d'alimentation (S1, S2) alimenté par le signal binaire (UE) avec, pour chacun, deux portes (G, I) comportant une sortie inverseuse et une sortie non inverseuse, que les branches présentent chacune au moins un appareil de réception (E1, E2) comportant chacun un amplificateur différentiel (A), auquel sont connectées, respectivement, la sortie non inverseuse de l'appareil d'alimentation en question et la sortie inverseuse de l'autre appareil d'alimentation respectif et les tensions de fonctionnement (UB1, UB2, UB3, UB4) sont acheminées via des éléments à retard (T).

2. Montage de circuit selon la revendication 1, caractérisé en ce que les portes (G, I) des appareils d'alimentation (S1, S2) se présentent sous la forme de tampons à trois états en technique TTL.

3. Montage de circuit selon la revendication 1 ou 2, caractérisé en ce que l'appareil de réception (E) présente un réseau de résistances (R1, R2, R3, R4) et de diodes redresseuses (D3, D4).

4. Montage de circuit selon l'une quelconque des revendications 1 à 3, caractérisé en ce que les appareils d'alimentation (S1, S2) et les appareils de réception (E1, E2) se présentent respectivement sous la forme de modules enfichables.
